# EUROPÄISCHE PATENTSCHRIFT

(11) **EP 2 030 538 B1**
(45) Veröffentlichungstag und Bekanntmachung des Hinweises auf die Patenterteilung: **06.03.2013**
(21) Anmeldenummer: 08014115.3
(22) Anmeldetag: 07.08.2008
(51) Int. Cl.: A47J 31/41, A47J 31/40

(54) **Vorrichtung und Verfahren zum Bereiten von aromatisierten Heißgetränken, insbesondere Kaffee und Tee**
Method and device for preparing aromatic hot drinks, in particular coffee and tea
Dispositif et procédé de préparation de boissons chaudes aromatisées, en particulier du café et du thé

(30) Priorität: 29.08.2007 DE 102007041022
(43) Veröffentlichungstag der Anmeldung: 04.03.2009
(73) Patentinhaber: FRANKE Kaffeemaschinen AG, 4663 Aarburg (CH)
(72) Erfinder: Peden, Ray, Everett, WA 98201 (US); Probst, Roman, Seattle, WA 98119 (US)
(74) Vertreter: Lemcke, Brommer & Partner

(56) Entgegenhaltungen:
- EP-A1- 2 011 422
- WO-A1-2006/058713
- DE-A1- 10 102 669
- ITT industries: "Fountain Syrup Sold-Out Switch", US , 1. November 2001 (2001-11-01), XP002661432, Gefunden im Internet: URL:http://www.ittflowcontrol.com/files/Sy rup%20Sold-out%20Switch%2081000-040.pdf [gefunden am 2011-10-17]

## Beschreibung

Die vorliegende Erfindung betrifft eine Vorrichtung nach dem Oberbegriff des Patentanspruchs 1 zum Bereiten von aromatisierten Heißgetränken, insbesondere Kaffee, Milch, Tee oder Mischgetränken, mit einer Einrichtung zum Zubereiten des Heißgetränks, die einen ersten Auslass aufweist, über den das Heißgetränk in ein Aufnahmegefäß, wie eine Tasse, einen Becher oder dergleichen, ausgebbar ist.

Weiterhin betrifft die vorliegende Erfindung ein Verfahren nach dem Oberbegriff des Patentanspruchs 12 zum Bereiten von aromatisierten Heißgetränken, insbesondere Kaffee, Milch, Tee oder Mischgetränken.

Aus der WO 2006/058713 A1 ist eine Vorrichtung nach dem Oberbegriff des Anspruchs 1 bekannt.

Aromatisierte Heißgetränke, insbesondere Kaffee, dem Aromastoffe in Sirupform zugesetzt werden, sind allgemein bekannt und erfreuen sich großer Beliebtheit. In der Regel wird dabei das Heißgetränk in einer entsprechenden Heißgetränk-Zubereitungseinrichtung, wie einem Kaffeevollautomat, zubereitet und dann beim Ausgeben mit dem gewünschten Aromastoff und gegebenenfalls weiteren Heißgetränkezusätzen, wie Milch, Milchschaum oder dergleichen, gemischt.

Aus der WO 2006/135864 A2 ist ein automatischer Aromastoffdosierer für eine automatisierte Espressomaschine bekannt, bei dem eine Mischkammer vorgesehen ist, die zwei Einlässe aufweist, wobei ein Einlass mit einer Milchpumpe und der andere Einlass mit einem Aromastoffreservoir verbunden ist. In der Mischkammer wird geschäumte Milch mit einem Aromastoff gemischt, und die so erzeugte geschäumte und aromatisierte Milch wird anschließend über einen Auslass in ein Aufnahmegefäß ausgegeben, das über einen anderen Auslass mit zubereitetem Kaffee (Espresso) befüllt werden kann. Dabei besteht insbesondere im Bereich der Mischkammer aufgrund der dort herrschenden hohen Temperaturen in Verbindung mit regelmäßig vorhandenen Zuckerbestandteilen der zugesetzten Aromastoffe die Gefahr, dass sich im Betrieb der Vorrichtung Rückstände oder Verschmutzungen bilden, die anschließend nur unter großem Aufwand wieder entfernbar sind.

Der Erfindung liegt die Aufgabe zugrunde, eine Vorrichtung und ein Verfahren der jeweils eingangs genannten Art anzugeben, die sich im Betrieb durch eine besondere Bedienfreundlichkeit insbesondere in Bezug auf Wartungs- und Reinigungsarbeiten auszeichnen.

Die Aufgabe wird gelöst durch eine Vorrichtung mit den Merkmalen des Patentanspruchs 1 sowie durch ein Verfahren mit den Merkmalen des Patentanspruchs 12.

Vorteilhafte Weiterbildungen der erfindungsgemäßen Vorrichtung sind Gegenstand von Unteransprüchen, deren Wortlaut hiermit durch ausdrückliche Bezugnahme in die Beschreibung aufgenommen wird, um unnötige Textwiederholungen zu vermeiden.

Erfindungsgemäß ist eine Vorrichtung zum Bereiten von aromatisierten Heißgetränken, insbesondere Kaffee, mit einer Einrichtung zum Zubereiten des Heißgetränks, die einen ersten Auslass aufweist, über den das Heißgetränk in ein Aufnahmegefäß, wie eine Tasse, einen Becher oder dergleichen, ausgebbar ist, gekennzeichnet durch wenigstens einen zweiten Auslass, der von dem ersten Auslass fluidtechnisch getrennt ist, und der zum Ausgeben wenigstens eines Aromastoff, insbesondere eines Sirups, in das Aufnahmegefäß mit wenigstens einem Aromastoffreservoir fluidtechnisch verbunden ist.

Weiterhin ist ein Verfahren zum Bereiten von aromatisierten Heißgetränken, insbesondere Kaffee, unter Verwendung der erfindungsgemäßen Vorrichtung dadurch gekennzeichnet, dass das Heißgetränk und gegebenenfalls weitere Heißgetränkezusätze über den ersten bzw. gegebenenfalls einen dritten Auslass in ein Aufnahmegefäß ausgegeben werden und dass zuvor und/oder gleichzeitig und/oder anschließend wenigstens ein Aromastoff über den zweiten Auslass in das Aufnahmegefäß ausgegeben wird:

Ein grundlegendes Merkmal der vorliegenden Erfindung besteht demnach darin, dass ein separater Auslass vorgesehen ist, über den ausschließlich Aromastoff, beispielsweise in Form von Sirup, in das Aufnahmegefäß ausgegeben wird, wohingegen über einen anderen Auslass das zubereitete Heißgetränk und/oder - in Weiterbildung der erfindungsgemäßen Vorrichtung - weitere Heißgetränkzusätze, wie Milch oder Milchschaum, ausgegeben werden. Insofern unterscheidet sich die vorliegende Erfindung von dem weiter oben angegebenen Stand der Technik, bei dem gerade das Vermischen von Milch und Aromastoff die grundlegende Idee darstellt. Auf diese Weise erreicht die vorliegende Erfindung eine verbesserte Bedienfreundlichkeit, insbesondere im Hinblick auf Wartungs- und Reinigungsarbeiten.

Weiterbildungen der erfindungsgemäßen Vorrichtung sehen vor, dass diese eine Mehrzahl von Aromastoffreservoiren oder Aromastoffbehältern aufweist, die jeweils (unterschiedliche) Aromastoffe enthalten. Für jeden Aromastoff bzw. jedes Aromastoffreservoir ist jeweils ein eigener zweiter Auslass zum Ausgeben des Aromastoffs in das Aufnahmegefäß vorgesehen. Die Aromastoffreservoire können insbesondere als Schlauchbeutel oder dergleichen ausgebildet sein.

Zum Fördern des betreffenden Aromastoffs ist in Weiterbildung der erfindungsgemäßen Vorrichtung vorgesehen, dass diese in Verbindung mit jedem zweiten Auslass ein Pumpmittel aufweist. Das bzw. die Pumpmittel können insbesondere als CO₂-Pumpen ausgebildet sein, ohne dass die vorliegende Erfindung hierauf beschränkt wäre.

Zum Fördern bzw. Dosieren der Aromastoffe sieht eine andere Weiterbildung der erfindungsgemäßen Vorrichtung vor, dass jedes Pumpmittel unabhängig von den anderen Pumpmitteln steuerbar ist, insbesondere durch eine übergeordnete Steuereinheit der Vorrichtung.

Zu diesem Zweck sieht eine andere Weiterbildung der erfindungsgemäßen Vorrichtung vor, dass zum gesteuerten Ausgeben des Aromastoffs bzw. der Aromastoffe zwischen einem jeweiligen Aromastoffreservoir und dem zugehörigen zweiten Auslass eine Schalter-Ventil-Anordnung geschaltet ist. Diese kann gemäß einer anderen Ausgestaltung für jeden Aromastoff ein zugehöriges Schaltmittel aufweisen, dass zum Öffnen und/oder Unterbrechen der Aromastoffzufuhr ausgebildet ist. Die Steuerung der Schaltmittel erfolgt vorzugsweise in Abhängigkeit von einem Füllgrad des jeweiligen Aromastoffreservoirs, insbesondere unter Verwendung eines Unterdruck- oder Vakuumsensors. Beispielsweise kann vorgesehen sein, dass das Schaltmittel für einen bestimmten Aromastoff dessen Zufuhr bzw. eine entsprechende Verbindung unterbricht, wenn der Füllgrad unter ein vorbestimmtes Niveau abgesunken ist (so genannter Sold-Out-Switch). Die Schaltmittel können weiterhin in signaltechnischer Verbindung mit der bereits erwähnten Steuereinheit stehen, z. B. um bei Fehlen eines Aromastoffs ein entsprechendes Warnsignal auszugeben und/oder die Produktausgabe sperren.

Eine andere Ausgestaltung der erfindungsgemäßen Vorrichtung sieht vor, dass die Schalter-Ventil-Anordnung zudem für jeden Aromastoff ein zugeordnetes Ventilmittel zum Ausgeben des betreffenden Aromastoffs über den jeweiligen zweiten Auslass aufweist. Das Ventilmittel steht zum dosierten Ausgeben des betreffenden Aromastoffs vorzugsweise ebenfalls in signaltechnischer Wirkverbindung mit der bereits erwähnten Steuereinheit.

Gemäß einer entsprechenden Weiterbildung der erfindungsgemäßen Vorrichtung ist vorgesehen, dass das genannte Ventilmittel als Magnetspulenventil (KIP-Ventil) ausgebildet ist. Weiterhin kann vorgesehen sein, dass jedes Ventilmittel unabhängig von den anderen Ventilmitteln steuerbar ist, insbesondere durch die bereits mehrfach erwähnte Steuereinheit der Vorrichtung.

Da bei der Zubereitung aromatisierter Heißgetränke regelmäßig noch weitere Heißgetränkezusätze, wie Milch, Milchschaum oder dergleichen, ausgegeben werden, sieht eine andere Weiterbildung der erfindungsgemäßen Vorrichtung vor, dass diese einen dritten Auslass aufweist, der fluidtechnisch von den ersten und zweiten Auslässen getrennt ist, und über den die genannten weiteren Heißgetränkezusätze ausgegeben werden können. Auf diese Weise ist für jeden Bestandteil des Heißgetränks ein eigener Auslass vorgesehen, was die Bedienbarkeit der Vorrichtung, insbesondere im Hinblick auf Wartungs- und Reinigungsarbeiten, deutlich erleichtert.

Alternativ kann jedoch auch vorgesehen sein, dass die genannten weiteren Heißgetränkezusätze über denselben Auslass ausgegeben werden wie das zubereitete Heißgetränk.

Es liegt ebenfalls im Rahmen der vorliegenden Erfindung, die erfindungsgemäße Vorrichtung so auszubilden, dass sie zusätzlich zur oder anstelle der Zubereitung von Heißgetränken zur Zubereitung von Kaltgetränken dient. Demnach würde die Vorrichtung zum Bereiten von aromatisierten Heiß- und/oder Kaltgetränken, insbesondere Kaffee, Milch, Tee oder Mischgetränken, eine Einrichtung zum Zubereiten des Heiß- und/oder Kaltgetränks aufweisen, die einen ersten Auslass aufweist, über den das Heiß- und/oder Kaltgetränk in ein Aufnahmegefäß, wie eine Tasse, einen Becher oder dergleichen, ausgebbar ist, und wenigstens einen zweiten Auslass, der von dem ersten Auslass fluidtechnisch getrennt ist, und der zum Ausgeben wenigstens eines Aromastoffs, insbesondere eines Sirups, in das Aufnahmegefäß mit wenigstens einem Aromastoffreservoir fluidtechnisch verbunden ist. Weitere Ausgestaltungen dieser Ausführungsform ergeben sich in entsprechender Weise aus den beigefügten Ansprüchen. Zusätzlich zu diesen Ausgestaltungen kann ein weiterer Auslass vorgesehen sein, der zum Ausgeben von insbesondere gefrorenen Flüssigkeiten oder Lebensmitteln, wie etwa Eiswürfeln, gecrushtem Eis, Speiseeis oder Fruchtmark in das Aufnahmegefäß dient und mit wenigstens einem Reservoir mit gefrorenen Flüssigkeiten oder Lebensmitteln verbunden ist. Der weitere Auslass kann ebenso dazu dienen, zusätzlich zu dem Auslass für Heißgetränke einen Auslass für Kaltgetränke zur Verfügung zu stellen, so dass mittels derselben Vorrichtung ohne große Umrüstungsarbeiten wahlweise Heiß- oder Kaltgetränke zubereitet werden können.

Weitere Eigenschaften und Vorteile der vorliegenden Erfindung ergeben sich aus der nachfolgenden Beschreibung von Ausführungsbeispielen anhand der Zeichnung. Es zeigt:
- Figur 1: schematisch in der Gesamtansicht eine Ausgestaltung der erfin- dungsgemäßen Vorrichtung zum Bereiten von aromatisierten Heiß- getränken; und
- Figur 2: eine detaillierte Ansicht einer Schalter-Ventil-Anordnung in der Vor- richtung gemäß Figur 1.

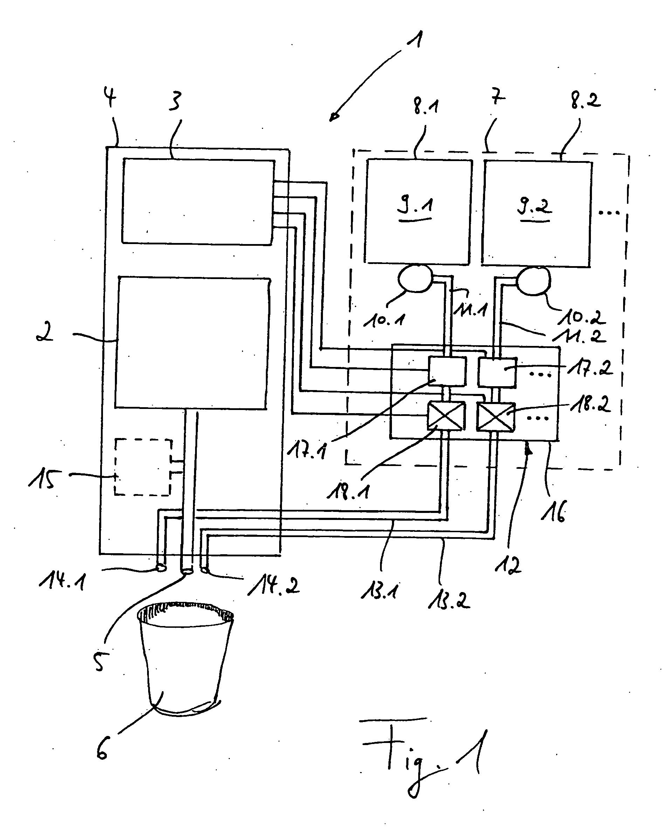

Figur 1 zeigt anhand einer schematischen Gesamtansicht eine Ausgestaltung der erfindungsgemäßen Vorrichtung 1 zum Bereiten von aromatisierten Heißgetränken, insbesondere Kaffee.

Die Vorrichtung 1 weist zunächst eine Einrichtung 2 zum Zubereiten des Heißgetränks auf, die vorliegend nur schematisch als Block dargestellt ist, in der Praxis jedoch insbesondere als Kaffeevollautomat mit Mahlwerk, Brüheinheit, Kaffeebohnenvorratsbehälter, Wassertank- oder -anschluss und dergleichen ausgebildet sein kann, was dem Fachmann bekannt ist, so dass vorliegend nicht näher auf Einzelheiten der Einrichtung 2 einzugehen ist. Die Einrichtung 2 wirkt im Betrieb mit einer Steuereinheit 3 zusammen, und ist üblicherweise zusammen mit dieser in einem Gehäuse 4 angeordnet. Die Einrichtung 2 zum Zubereiten des Heißgetränks weist einen ersten Auslass 5 auf, über den das Heißgetränk in ein Aufnahmegefäß 6, beispielsweise eine Tasse oder einen Becher, ausgebbar ist. Das Aufnahmegefäß 6 wird zu diesem Zweck entweder automatisch oder manuell unter dem ersten Auslass 5 platziert.

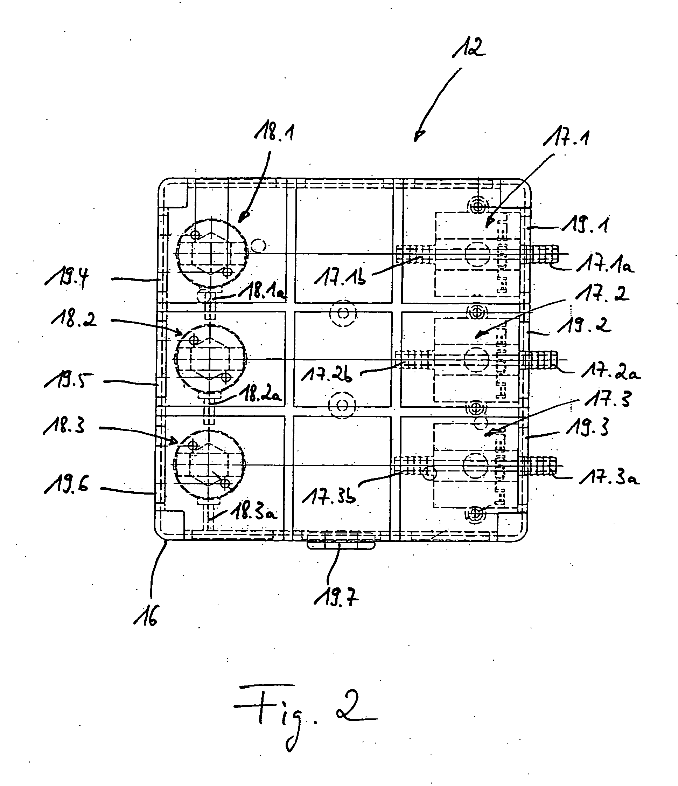

Um das Heißgetränk, insbesondere Kaffee, auf Wunsch in verschiedenen Geschmacksrichtungen, das heißt aromatisiert anbieten zu können, verfügt die Vorrichtung 1 weiterhin über eine Aromatstoffbevorratungs- und Dosiereinrichtung 7, die in Figur 1 mittels einer gestrichelten Box symbolisch dargestellt ist. Die Aromastoffbevorratungs- und Dosiereinrichtung 7 weist eine Anzahl von Aromastoffbehältern (z.B. Schlauchbeutel) 8.1, 8.2 auf, von denen aus Gründen der Übersichtlichkeit vorliegend nur zwei dargestellt sind. Die Aromastoffbehälter 8.1, 8.2 enthalten jeweils einen (unterschiedlichen) Aromastoff 9.1, 9.2 in Form einer sirupartigen Flüssigkeit, beispielsweise mit Karamell-, Vanille- oder Schokoladenaroma, wobei diese Aufzählung keinerlei Anspruch auf Vollständigkeit erhebt. Zum Dosieren bzw. Fördern des Aromastoffs 9.1, 9.2 ist jeder Aromastoffbehälter 8.1, 8.2 mit einer Pumpe 10.1, 10.2 verbunden, die insbesondere als CO₂-Pumpe ausgebildet sein kann. Von den Pumpen 10.1, 10.2 führt jeweils eine Leitung 11.1, 11.2, die als Kunststoff-Schlauchleitung ausgebildet sein kann, zu einer Schalter-Ventil-Anordnung 12, auf die weiter unten anhand der Figur 2 noch genauer eingegangen wird. Von der Schalter-Ventil-Anordnung 12 führen jeweils getrennte Leitungen 13.1, 13.2 für die Aromastoffe 9.1, 9.2 zu dem Gehäuse 4 der Heißgetränk-Zubereitungseinrichtung 2, an dem sie in der Nähe des ersten (Heißgetränk-)Auslasses 5 in Form weiterer (zweiter) Auslässe 14.1, 14.2 angeordnet sind, über welche dem zubereiteten Heißgetränk, das aus dem ersten Auslass 5 austritt, gezielt ein bestimmter Aromastoff 9.1, 9.2 oder eine beliebige Mischung bevorrateter Aromastoffe 9.1, 9.2 direkt im Aufnahmegefäß 6 beigemischt werden kann. Je nach gewünschter Zubereitungsart kann dabei das Ausgeben des Aromastoffs oder der Aromastoffe 9.1, 9.2 über die zweiten Auslässe 14.1, 14.2 vor undloder während und/oder nach dem Ausgeben des Heißgetränks über den ersten Auslass 5 erfolgen.

Wie bereits erwähnt, ist die vorliegende Erfindung keinesfalls auf das Vorsehen von zwei Aromastoffbehältern 8.1, 8.2 mit den entsprechenden Förder- und Dosiereinrichtungen beschränkt. Darüber hinaus können auch der erste Auslass 5 für das zubereitete Heißgetränk und die zweiten Auslässe 14.1, 14.2 für die zu dosierten Aromastoffe 9.1, 9.2 relativ zueinander in beliebiger Geometrie angeordnet sein, solange ein Ausgeben des Heißgetränks und/oder der Aromastoffe in das Aufnahmegefäß 6 sichergestellt ist.

Eine bevorzugte Weiterbildung der erfindungsgemäßen Vorrichtung 1, die in Figur 1 nicht dargestellt ist, sieht dementsprechend vor, dass beiderseits des ersten Auslasses 5 eine Mehrzahl von zweiten Auslässen 4.1, 4.2 hintereinander (in die Blattebene hinein) angeordnet sind. Alternativ ist insbesondere auch eine kreis- oder ringartige Anordnung von zweiten Auslässen 4.1, 14.1, 14.2 um den ersten Auslass 5 herum möglich.

Auch hinsichtlich der räumlichen Anordnung von Heißgetränk-Zubereitungseinrichtung 2 bzw. Gehäuse 4 und Aromstoffbevorratungs- und Dosiereinrichtung 7 relativ zueinander ist die vorliegende Erfindung keinesfalls auf die Figur 1 schematisch dargestellte Anordnung beschränkt. Obwohl insbesondere die Aromastoffbehälter 8.1, 8.2 vorteilhafterweise außerhalb des Gehäuses 4 insbesondere zusammen mit den Pumpen 10.1, 10.2 in einer Art Ständer- oder Rack-System (nicht gezeigt) gelagert werden, ist auch die Unterbringung in einem gemeinsamen Gehäuse (nicht gezeigt) möglich, beispielsweise wenn ein vollautomatischer Selbstbedienungsautomat realisiert werden soll. Auch die Schalter-Ventil-Anordnung 12, auf die weiter unten noch genauer eingegangen wird, braucht nicht räumlich zusammen mit den Aromastoffbehältern 8.1, 8.2 und den Pumpen 10.1, 10.2 angeordnet zu sein. Vielmehr ist es im Rahmen der vorliegenden Erfindung auch möglich, die Schalter-Ventil-Anordnung 12 innerhalb des Gehäuses 4 oder in einem (nicht gezeigten) Kühlbehälter für Milch oder andere Zusatzstoffe anzuordnen und dort über die Leitungen 11.1, 11.2 mit den außerhalb des Gehäuses 4 oder dem Kühlbehälter angeordneten Aromastoffbehältern 8.1, 8.2 sowie den Pumpen 10.1, 10.2 zu verbinden.

Die Leitungen 13.1, 13.2 können ebenso wie die Leitungen 11.1, 11.2 als Schlauchleitungen ausgebildet sein. Alternativ und/oder zusätzlich können die Leitungen 13.1, 13.2 jedoch insbesondere im Bereich der zweiten Auslässe 14.1, 14.2 ebenso wie der erste Auslass 5 aus hygienischen und/oder ästhetischen Gründen auch in Edelstahl oder dergleichen ausgebildet sein.

Weiterhin ist in Figur 1 bei Bezugszeichen 15 schematisch noch eine Einrichtung zum Zubereiten und Ausgeben weiterer Heißgetränkezusätze, wie Milch, Milchschaum oder dergleichen, dargestellt. Diese kann abweichend von der Darstellung in Figur 1 grundsätzlich auch außerhalb des Gehäuses 4 angeordnet sein. Die Funktion und die grundsätzliche Ausgestaltung der Einrichtung 15 sind dem Fachmann bekannt, so dass vorliegend darauf nicht weiter einzugehen ist. Die Einrichtung 15 kann alternativ auch in die Heißgetränk-Zubereitungseinrichtung 2 integriert sein. Gemäß der Darstellung in Figur 1 ist die Einrichtung 15 zum Ausgeben des weiteren Heißgetränkzusatzes bzw. der weiteren Heißgetränkzusätze mit dem ersten Auslass 5 verbunden, so dass das zubereitete Heißgetränk und der bzw. die weiteren Heißgetränkezusätze vor dem Ausgeben gemischt und dann über den ersten Auslass 5 gemeinsam ausgegeben werden.

Alternativ ist jedoch auch möglich, für den bzw. die weiteren Heißgetränkezusätze noch einen zusätzlichen, dritten Auslass (nicht gezeigt) in Verbindung mit dem Element 15 vorzusehen, so dass dann in Abwandlung der Darstellung gemäß Figur 1 das zubereitete Heißgetränk, der oder die Aromastoffe 9.1, 9.2 und der oder die weiteren Heißgetränkezusätze jeweils über getrennte Auslässe in das Aufnahmegefäß 6 ausgegeben werden.

Figur 2 zeigt anhand einer detaillierten Ansicht von unten eine Ausgestaltung der Schalter-Ventil-Anordnung 12 in Figur 1. Abweichend von der Darstellung in Figur 1 weist die Schalter-Ventil-Anordnung 12 gemäß Figur 2 Einrichtungen zum Fördern bzw. Dosieren von drei (unterschiedlichen) Aromastoffen Ober entsprechende Dosier- und Fördermittel auf. Bis auf diesen Unterschied entsprechen die Bezugszeichen in Figur 2 denjenigen in Figur 1.

Demgemäß weist die Schalter-Ventil-Anordnung oder Ventilbox 12 ein Gehäuse 16 in Form einer Abzweigdose auf. Innerhalb des Gehäuses 16 sind auf einer Seite eine Anzahl von (identischen) Schaltmitteln 17.1, 17.2, 17.3 angeordnet. Die Schaltmittel 17.1, 17.2, 17.3 weisen Anschlusseinrichtungen 17.1a, 17.2a, 17.3a zum Anschließen der (Schlauch-)Verbindungen an die Aromastoffbehälter 8.1, 8.2 bzw. die Pumpen 10.1, 10.2 (vgl. Figur 1) auf. Auf der jeweils anderen Seite weisen die Schaltmittel 17.1-17.3 entsprechende Anschlussmittel 17.1b, 17.2b, 17.3b auf, über welche die Schaltmittel 17.1-17.3 fluidtechnisch mit zugeordneten Ventilmitteln 18.1, 18.2, 18.3 verbindbar sind, die auf der gegenüberliegenden Seite des Gehäuses 16 der Schalter-Ventil-Anordnung 12 vorgesehen sind. Von den Ventilmitteln 18.1-18.3 führen dann die (Schlauch-)Leitungen 13.1, 13.2 zu den zweiten Auslässen 14.1, 14.2, wie in Figur 1 dargestellt und weiter oben entsprechend erläutert. Die Ventilmittel 18.1-18.3 sind vorliegend als Magnetspulenventile (KIP-Ventile) ausgebildet und weisen jeweils Steueranschlüsse 18.1a, 18.2a, 18.3a auf, über die sie mit der Steuereinheit 3 (Figur 1) verbindbar sind, was in Figur 1 schematisch dargestellt ist. Ebenso sind auch die Schaltmittel 17.1-17.2 steuerungstechnisch mit der Steuereinheit 3 (Figur 1) verbindbar, was in Figur 1 ebenfalls schematisch dargestellt ist.

Das Gehäuse 16 der Schalter-Ventil-Anordnung 12 weist bei 19.1-19.6 eine Reihe von Durchbrüchen zum Durchführen der weiter oben anhand der Figur 1 beschriebenen (Schlauch-)Verbindungen 11.1, 11.2; 13.1, 13.2 auf, welche die Schalter-Ventil-Anordnung 12 mit den Aromastoffbehältern 8.1, 8.2 bzw. den Pumpen 10.1, 10.2 einerseits und den zweiten Auslässen 14.1, 14.2 andererseits verbinden, wobei wiederum in Figur 1 jeweils nur zwei derartige Verbindungen dargestellt sind. Ein weiterer Durchbruch 19.7, der sich auf einer anderen Seite des Gehäuses 16 als die Durchbrüche 19.1-19.3 bzw. 19.4-19.6 befindet, ist als Kabeldurchführungstülle ausgebildet, über welche die Steuerleitungen zum Verbinden mit der Steuereinheit 3 (Figur 1) nach Art eines Kabelbaums geführt sind, was weder in Figur 1 noch in Figur 2 explizit dargestellt ist.

Die Schaltmittel 17.1-17.2 sind vorliegend als so genannte Sold-Out-Schalter oder -Switches der Marke Flojet® ausgeführt, daneben können aber auch entsprechende andere Schaltmittel zum Einsatz kommen. Diese stellen sensorisch fest, beispielsweise mittels eines Unterdrucksensors, ob bzw. wann ein mit dem Anschlussmittel 17.1a-c verbundenes Aromastoffreservoir leer ist, und unterbrechen entsprechend die Verbindung bzw. übertragen ein Steuersignal an die Steuereinheit 3 (Figur 1), welche die Vorrichtung 1 bzw. zumindest die Heißgetränk-Zubereitungseinrichtung 2 in einen entsprechenden Betriebszustand umschalten kann. Beispielsweise wird dann ein Fehlersignal angezeigt, welches eine Bedienperson zum Wiederauffüllen des entsprechenden Aromastoffsreservoir anhält. Bei einer vollautomatischen Heißgetränkzubereitungsvorrichtung kann eine entsprechende Wahlmöglichkeit blockiert werden.

Die Ventilmittel 18.1-18.3 können - wie gesagt - insbesondere als Magnetspulenventile ausgebildet sein, und dienen nach Maßgabe der Steuereinheit 3 (Figur 1) zum dosierten Fördern des entsprechenden Aromastoffs 9.1, 9.2, um ein gewünschtes aromatisiertes Heißgetränk in dem Aufnahmegefäß 6 (Figur 1) bereitzustellen.

In diesem sowie in den weiter oben beschriebenen Zusammenhängen können an dem Gehäuse 4 in signaltechnischer Wirkverbindung mit der Steuereinheit 3 entsprechende Eingabe- und Ausgabemittel vorgesehen sein, was dem Fachmann jedoch bekannt ist, so dass darauf vorliegend nicht weiter einzugehen ist.

In jedem Fall werden im Rahmen der vorliegenden Erfindung der oder die Aromastoffe 9.1, 9.2 (Figur 1) über separate (zweite) Auslässe 14.1, 14.2 getrennt von dem zubereiteten Heißgetränk und gegebenenfalls weiteren Heißgetränkzusätzen, wie Milch, Milchschaum oder dergleichen, ausgegeben, was im Betrieb der erfindungsgemäßen Vorrichtung 1 aufgrund der getrennten Auslässe insbesondere dazu führt, dass die Gesamtvorrichtung hinsichtlich Wartung und Reinigung bedienungsfreundlicher ausgebildet ist.

## Patentansprüche

1. Vorrichtung (1) zum Bereiten von aromatisierten Heißgetränken, insbesondere Kaffee, Milch, Tee oder Mischgetränken, mit einem Gehäuse (4) und einer in dem Gehäuse (4) angeordneten Einrichtung (2) zum Zubereiten des Heißgetränks, die einen ersten Auslass (5) aufweist, über den das Heißgetränk in ein Aufnahmegefäß (6), wie eine Tasse, einen Becher oder dergleichen, ausgebbar ist, wobei durch wenigstens einen zweiten Auslass (14.1, 14.2), der von dem ersten Auslass (5) fluidtechnisch getrennt ist, und der zum Ausgeben wenigstens eines Aromastoffs (9.1, 9.2), insbesondere eines Sirups, in das Aufnahmegefäß (6) mit wenigstens einem Aromastoffreservoir (8.1, 8.2) fluidtechnisch mittels einer Leitung (13.1, 13.2) verbunden ist, wobei die Leitung (13.3, 13.2) zum Ausbilden des zweiten Auslasses (14.1, 14.2) an dem Gehäuse (4) angeordnet ist,
**dadurch gekennzeichnet,**
**dass** das Aromastoffreservoir (8.1, 8.2) Bestandteil einer außerhalb des Gehäuses (4) angeordneten Aromastoffbevorratungs- und Dosiereinrichtung (7) ist.

2. Vorrichtung (1) nach Anspruch 1,
**dadurch gekennzeichnet,**
**dass** für eine Mehrzahl von Aromastoffen (8.1, 9.2) jeweils ein zweiter Auslass (14.1, 14.2) und ein Aromastoffreservoir (8.1, 8.2) vorgesehen ist.

3. Vorrichtung (1) nach Anspruch 1 oder 2,
**dadurch gekennzeichnet,**
**dass** in Verbindung mit jedem zweiten Auslass (14.1, 14.2) ein Pumpmittel (10.1, 10.2) zum Fördern des betreffenden Aromastoffs (9.1, 9.2) vorgesehen ist, insbesondere eine CO₂-Pumpe.

4. Vorrichtung (1) nach mindestens einem der Ansprüche 1 bis 3,
**dadurch gekennzeichnet,**
**dass** jedes Pumpmittel (10.1, 10.2) unabhängig von den anderen Pumpmitteln steuerbar ist.

5. Vorrichtung (1) nach mindestens einem der Ansprüche 1 bis 4,
**dadurch gekennzeichnet,**
**dass** zwischen dem Aromastoffreservoir (8.1, 8.2) und dem zweiten Auslass (14.1, 14.2) eine Schalter-Ventil-Anordnung (12) zum gesteuerten Ausgeben des Aromastoffs (9.1, 9.2) angeordnet ist.

6. Vorrichtung (1) nach Anspruch 5,
**dadurch gekennzeichnet,**
**dass** die Schalter-Ventil-Anordnung (12) für jeden Aromastoff (9.1, 9.2) ein Schaltmittel (17.1-17.3) zum Öffnen/Unterbrechen der Aromastoffzufuhr aufweist, das in Abhängigkeit von einem Füllgrad des Aromastoffreservoirs (8.1, 8.2) gesteuert ist.

7. Vorrichtung (1) nach Anspruch 5 oder 6,
**dadurch gekennzeichnet,**
**dass** die Schalter-Ventil-Anordnung (12) ein Ventilmittel (18.1-18.3) zum Ausgeben des betreffenden Aromastoffs (9.1, 9.2) über den jeweiligen zweiten Auslass (14.1, 14.2) aufweist.

8. Vorrichtung (1) nach Anspruch 7,
**dadurch gekennzeichnet,**
**dass** das Ventilmittel (18.1-18.3) als Magnetspulenventil ausgebildet ist.

9. Vorrichtung (1) nach Anspruch 7 oder 8,
**dadurch gekennzeichnet,**
**dass** jedes Ventilmittel (18.1-18.3) unabhängig von den anderen Ventilmitteln steuerbar ist.

10. Vorrichtung (1) nach mindestens einem der Ansprüche 1 bis 9,
**dadurch gekennzeichnet,**
**dass** zum Ausgeben weiterer Heißgetränkezusätze, wie Milch, Milchschaum oder dergleichen, ein dritter Auslass vorgesehen ist, der fluidtechnisch von dem ersten (5) und zweiten Auslässen (14.1, 14.2) getrennt ist.

11. Vorrichtung (1) nach mindestens einem der Ansprüche 1 bis 9,
**dadurch gekennzeichnet,**
**dass** der erste Auslass (5) zusätzlich zum Ausgeben weiterer Heißgetränkezusätze, wie Milch, Milchschaum oder dergleichen, ausgebildet ist.

12. Verfahren zum Bereiten von aromatisierten Heißgetränken, insbesondere Kaffee, unter Verwendung der Vorrichtung (1) nach mindestens einem der vorhergehenden Ansprüche, **dadurch gekennzeichnet, dass** das Heißgetränk und gegebenenfalls die weiteren Heißgetränkezusätze über dem ersten (5) bzw. gegebenenfalls den dritten Auslass in ein Aufnahmegefäß (6) ausgegeben werden und dass zuvor und/oder gleichzeitig und/oder anschließend wenigstens ein Aromastoff (9.1, 9.2) über den zweiten Auslass (14.1, 14.2) in das Aufnahmegefäß (6) ausgegeben wird.

## Claims

1. Device (1) for preparing aromatic hot drinks, in particular coffee, milk, tea or mixed drinks, comprising a housing (4) and a unit (2) which is disposed in the housing (4) for preparing the hot drink and is provided with a first outlet (5), via which the hot drink can be dispensed into a receiving vessel (6), such as a cup, a mug or the like, wherein at least one second outlet (14.1, 14.2), which is separated in terms of fluid technology from the first outlet (5) and which is connected in terms of fluid technology by means of a pipe (13.1, 13.2) to at least one aromatic substance reservoir (8.1, 8.2) for dispensing at least one aromatic substance (9.1, 9.2), in particular a syrup, into the receiving vessel (6), wherein the pipe (13.3, 13.2) for forming the second outlet (14.1, 14.2) is disposed on the housing (4), **characterised in that** the aromatic substance reservoir (8.1, 8.2) is a component of an aromatic substance storage and dosing device (7) disposed outside the housing (4).

2. Device (1) as claimed in Claim 1, **characterised in that** a second outlet (14.1, 14.2) and an aromatic substance reservoir (8.1, 8.2) is provided for each one of a plurality of aromatic substances (8.1, 8.2).

3. Device (1) as claimed in Claim 1 or 2, **characterised in that** in connection with each second outlet (14.1, 14.2) a pumping means (10.1, 10.2) is provided in order to transport the relevant aromatic substance (9.1, 9.2), in particular a CO₂ pump.

4. Device (1) as claimed in at least one of Claims 1 to 3, **characterised in that** each pumping means (10.1, 10.2) can be controlled independently of the other pumping means.

5. Device (1) as claimed in at least one of Claims 1 to 4, **characterised in that** for controlled dispensing of the aromatic substances (9.1, 9.2) a switch/valve arrangement (12) is disposed between the aromatic substance reservoir (8.1, 8.2) and the second outlet (14.1, 14.2).

6. Device (1) as claimed in Claim 5, **characterised in that** the switch/valve arrangement (12) has a switching means (17.1-17.3) for each aromatic substance (9.1, 9.2) in order to open/interrupt the supply of aromatic substances, the said switching means being controlled as a function of a degree of filling of the aromatic substance reservoir (8.1, 8.2).

7. Device (1) as claimed in Claim 5 or 6, **characterised in that** the switch/valve arrangement (12) has a valve means (18.1-18.3) for dispensing the relevant aromatic substance (9.1, 9.2) via the respective second outlet (14.1, 14.2).

8. Device (1) as claimed in Claim 7, **characterised in that** the valve means (18.1-18.3) is designed as a solenoid valve.

9. Device (1) as claimed in Claim 7 or 8, **characterised in that** each valve means (18.1-18.3) can be controlled independently of the other valve means.

10. Device (1) as claimed in any one of Claims 1 to 9, **characterised in that** for dispensing further hot drink additives, such as milk, foamed milk or the like, a third outlet is provided which is separated in terms of fluid technology from the first (5) and the second outlets (14.1, 14.2).

11. Device (1) as claimed in at least one of Claims 1 to 9, **characterised in that** the first outlet (5) is additionally embodied to dispense further hot drink additives, such as milk, foamed milk or the like.

12. Method for preparing aromatic hot drinks, in particular coffee, using the device (1) as claimed in at least one of the preceding claims, **characterised in that** the hot drink and optionally the additional hot drink additives are dispensed via the first (5) or optionally the third outlet into an receiving vessel (6), and that prior thereto and/or simultaneously and/or subsequently thereto at least one aromatic substance (9.1, 9.2) is dispensed via the second outlet (14.1, 14.2) into the receiving vessel (6).

## Revendications

1. Dispositif (1) de préparation de boissons chaudes aromatisées, en particulier de café, de lait, de thé ou de boissons mélangées, avec un carter (4) et avec un équipement (2) disposé dans le carter (4) et destiné à préparer la boisson chaude, équipement qui présente une première sortie (5), par l'intermédiaire de laquelle la boisson chaude peut être délivrée dans un récipient collecteur (6), tel qu'une tasse, un gobelet ou analogue, sachant qu'il est prévu au moins une deuxième sortie (14.1, 14.2), qui est fluidiquement séparée de la première sortie (5) et qui, afin de délivrer dans le récipient collecteur (6) au moins une substance aromatique (9.1, 9.2), en particulier un sirop, est fluidiquement relié à au moins un réservoir de substance aromatique (8.1, 8.2) au moyen d'une conduite (13.1, 13.2), sachant que la conduite (13.1, 13.2) est disposée sur le carter (4) afin de former la deuxième sortie (14.1, 14.2),
**caractérisé en ce que** le réservoir de substance aromatique (8.1, 8.2) fait partie d'un équipement (7) de stockage et de dosage de substance aromatique disposé en dehors du carter (4).

2. Dispositif (1) selon la revendication 1, **caractérisé en ce que**, pour chaque substance d'une pluralité de substances aromatiques (9.1, 9.2), il est prévu une deuxième sortie (14.1, 14.2) et un réservoir de substance aromatique (8.1, 8.2).

3. Dispositif (1) selon la revendication 1 ou 2, **caractérisé en ce qu'**un moyen de pompage (10.1, 10.2), en particulier une pompe à CO₂, est prévu en liaison avec chaque deuxième sortie (14.1, 14.2) pour véhiculer la substance aromatique concernée (9.1, 9.2).

4. Dispositif (1) selon au moins une des revendications 1 à 3, **caractérisé en ce que** chaque moyen de pompage (10.1, 10.2) peut être commandée indépendamment des autres moyens de pompage.

5. Dispositif (1) selon au moins une des revendications 1 à 4, **caractérisé en ce qu'**un ensemble (12) de commutateur et de vanne est disposé entre le réservoir de substance aromatique (8.1, 8.2) et la deuxième sortie (14.1, 14.2) pour commander la délivrance de la substance aromatique (9.1, 9.2).

6. Dispositif (1) selon la revendication 5, **caractérisé en ce que** l'ensemble (12) de commutateur et de vanne présente pour chaque substance aromatique (9.1, 9.2) un moyen de commutation (17.1-17.3) destiné à ouvrir ou interrompre l'apport de substance aromatique, moyen qui est commandé en fonction d'un degré de remplissage du réservoir de substance aromatique (8.1, 8.2).

7. Dispositif (1) selon la revendication 5 ou 6, **caractérisé en ce que** l'ensemble (12) de commutateur et de vanne présente un moyen formant vanne (18.1-18.3) pour délivrer la substance aromatique concernée (9.1, 9.2) par l'intermédiaire de la deuxième sortie respective (14.1, 14.2).

8. Dispositif (1) selon la revendication 7, **caractérisé en ce que** le moyen formant vanne (18.1-18.3) est réalisé sous forme de vanne à bobine électromagnétique.

9. Dispositif (1) selon la revendication 7 ou 8, **caractérisé en ce que** chaque moyen formant vanne (18.1-18.3) peut être commandé indépendamment des autres moyens formant vannes.

10. Dispositif (1) selon au moins une des revendications 1 à 9, **caractérisé en ce qu'**une troisième sortie, qui est fluidiquement séparée de la première sortie (5) et des deuxièmes sorties (14.1, 14.2), est prévue pour délivrer d'autres additifs de boissons chaudes tels que du lait, de la mousse de lait ou analogues.

11. Dispositif (1) selon au moins une des revendications 1 à 9, **caractérisé en ce que** la première sortie (5) est en outre conçue pour délivrer d'autres additifs de boissons chaudes tels que du lait, de la mousse de lait ou analogues.

12. Procédé de préparation de boissons chaudes aromatisées, en particulier de café, en utilisant le dispositif (1) selon au moins une des revendications précédentes, **caractérisé en ce que** la boisson chaude et le cas échant les autres additifs de boissons chaudes sont délivrés par l'intermédiaire de la première sortie (5) et le cas échéant de la troisième sortie dans un récipient collecteur (6), et **en ce que**, auparavant et/ou simultanément et/ou ensuite, au moins une substance aromatique (9.1, 9.2) est délivrée par l'intermédiaire de la deuxième sortie (14.1, 14.2) dans le récipient collecteur (6).
